# EUROPEAN PATENT SPECIFICATION

(11) **EP 2 378 323 B1**
(45) Date of publication and mention of the grant of the patent: **29.04.2015**
(21) Application number: 11159416.4
(22) Date of filing: 23.03.2011
(51) Int. Cl.: G02B 6/00, F21V 8/00, G02B 6/42, B60Q 1/00

(54) **Vehicle lamp**
Fahrzeuglampe
Lampe de véhicule

(30) Priority: 31.03.2010 JP 2010082499
(43) Date of publication of application: 19.10.2011
(73) Proprietor: Koito Manufacturing Co., Ltd., Tokyo 108-8711 (JP)
(72) Inventor: Okui, Kazuki, SHIZUOKA-SHI, SHIZUOKA (JP); Inoue, Akio, SHIZUOKA-SHI, SHIZUOKA (JP)
(74) Representative: Intès, Didier Gérard André

(56) References cited:
- EP-A1- 1 970 616
- DE-A1- 10 332 393
- JP-A- 1 211 705
- JP-A- 2002 367 404
- US-A- 5 416 669
- US-A1- 2001 038 736

## Description

### [Technical Field]

The present invention relates to a vehicle lamp for an automobile or the like, and particularly, to a vehicle lamp which makes the light of a LED light source enter a light guide arranged in the vicinity thereof, and emits the light toward an irradiation direction from the light guide.

### [Background]

Conventionally, there is known a vehicle lamp which forms a predetermined light distribution by a columnar light guide arranged along a front cover and a LED light source arranged in the vicinity of the light guide, within a lamp chamber defined by a lamp body and the front cover (for example, Patent Document 1).

Patent Document 2 discloses a vehicle lamp as per the preamble of claim 1.

Usually, the light guide is arranged so as to slant as it extends laterally or upward from the central side of a vehicle body along the shape of the vehicle body along with a front cover, and includes a reflecting surface having a diffusing step on a rear surface side. Also, the incident light from the LED light source is reflected by the diffusing step, and is emitted in an irradiation direction from a light-emitting surface on the front surface side.

[Patent Document 1] JP-A-2002-367404
[Patent Document 2] US 5,416,669

### [Summary of the Invention]

Patent document 2 discloses a vehicle lamp comprising: within a lamp chamber formed by a lamp body and a front cover,a light source; a columnar light guide having an incident portion at the end thereof in the vicinity of the light source,wherein the columnar light guide guides incident light from the light source, which enters via the incident portion, and irradiates the incident light from a light-emitting portion on a front side; an attachment member for fixing the columnar light guide having a through hole arranged in the vicinity of the light source side of the incident portion,wherein a peripheral surface of said through hole forms an annular reflecting portion, wherein the annular reflecting portion reflects light with a large emission angle, in relation to the optical axis (Ax) of the light source, that is to say light which has not been able to directly enter the incident portion from the light source, toward the incident portion, wherein the light source is arranged on a central axis of the annular reflecting portion

However, in the above-described conventional vehicle lamp, the light with a large emission angle of the emitted light from the LED light source cannot be made to enter the light guide, and it is difficult to enhance the light use efficiency of the LED light source.

One or more embodiments of the present invention provide a vehicle lamp capable of making the light from a light source reliably enter a light guide, thereby improving the light use efficiency of a light source.

A vehicle lamp, according to an exemplary embodiment of the invention, comprises:
within a lamp chamber formed by a lamp body and a front cover,
a light source;
a columnar light guide having an incident portion at the end thereof in the vicinity of the light source,
wherein the columnar light guide guides incident light from the light source, which enters via the incident portion, and irradiates the incident light from a light-emitting portion on a front side; and
an annular reflecting portion arranged in the vicinity of the light source side of the incident portion,
wherein the annular reflecting portion reflects the light with a large emission angle, which has not been able to directly enter the incident portion from the light source, toward the incident portion,
wherein the light source is arranged on a central axis of the annular reflecting portion.

According to the vehicle lamp of the above configuration, there is included an annular reflecting portion arranged in the vicinity of the light source side of the incident portion. The annular reflecting portion reflects light with a large emission angle, which has not been able to directly enter the incident portion from the light source, toward the incident portion. Thus, the light with a large emission angle from the light source can be reflected by the annular reflecting portion, and can be made to enter the light guide from the incident portion. This can improve the light use efficiency of the light source.

In the vehicle lamp, in one or more embodiments, the annular reflecting portion is formed on a peripheral surface of a through hole formed in a plate-shaped member, and a plurality of attachment ribs, which fix the columnar light guide, are integrally formed along the central axis of the annular reflecting portion, around the through hole on the columnar light guide side of the plate-shaped member.

According to the vehicle lamp of such a configuration, because the columnar light guide is positioned at a predetermined position of the plate-shaped member having the annular reflecting portion, the positional precision of the incident portion of the columnar light guide can be improved.

In the vehicle lamp, in one or more embodiments, the annular reflecting portion includes a columnar curved surface or a slope which forms a substantially truncated conical space whose diameter increases toward the columnar light guide from the light source, and
the columnar light guide is formed so that the shape of the incident portion in front view as seen from a position where the light source is arranged is circular, and the external diameter decreases gradually toward an extension direction from the incident portion.

According to the vehicle lamp of such a configuration, because the external diameter of the incident portion of the end of the light guide can be made large and the incidence area of the light guide can be made large, the light use efficiency of the light source can be further improved.

In the vehicle lamp, in one or more embodiments, the light source and the annular reflecting portion are fixed to a heat-radiating member attached to the lamp body.

According to the vehicle lamp of such a configuration, because the light source and the annular reflecting portion are fixed to a heat-radiating member arranged in the vicinity of the light source, the positional precision of the light source can be improved.

According to the vehicle lamp according to one or more embodiments of the invention, there is included an annular reflecting portion for reflecting light with a large emission angle, which has not been able to directly enter the incident portion from the light source, toward the incident portion. Thus, the light with a large emission angle from the light source can be reflected by the annular reflecting portion, and can be made to enter the light guide from the incident portion. This can improve the light use efficiency of the light source.

### [Brief Description of the Drawings]

Fig. 1 is a front view showing a first embodiment of a vehicle lamp according to an embodiment of the invention;
Fig. 2 is a sectional view along A-A line of Fig. 1;
Fig. 3 is an exploded perspective view showing a main part of Fig. 1;
Fig. 4 is a perspective view showing a state that a plated-shaped member of Fig. 3 is fixed to a heat-radiating member;
Fig. 5 is a perspective view along B-B line showing a fixing state of a columnar light guide of Fig. 4; and
Fig. 6 is an enlarged view of a main part of Fig. 5.

### [Detailed Description]

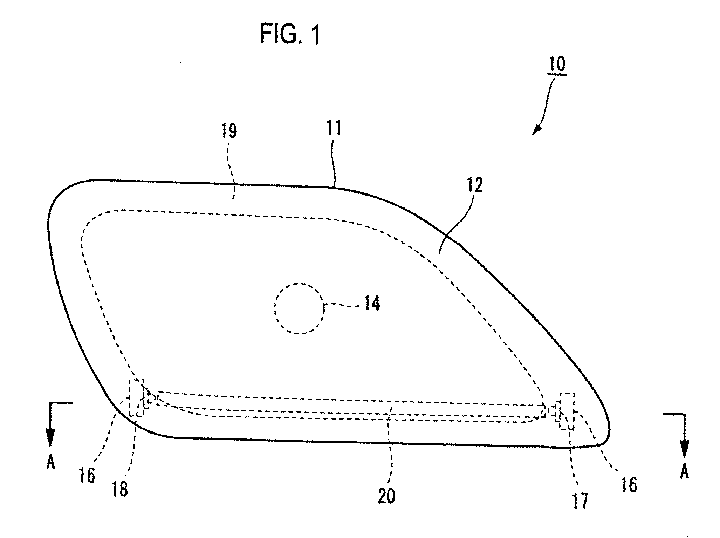

Hereinafter, embodiments of a vehicle lamp according to the present invention will be described with reference to Figs. 1 to 6.

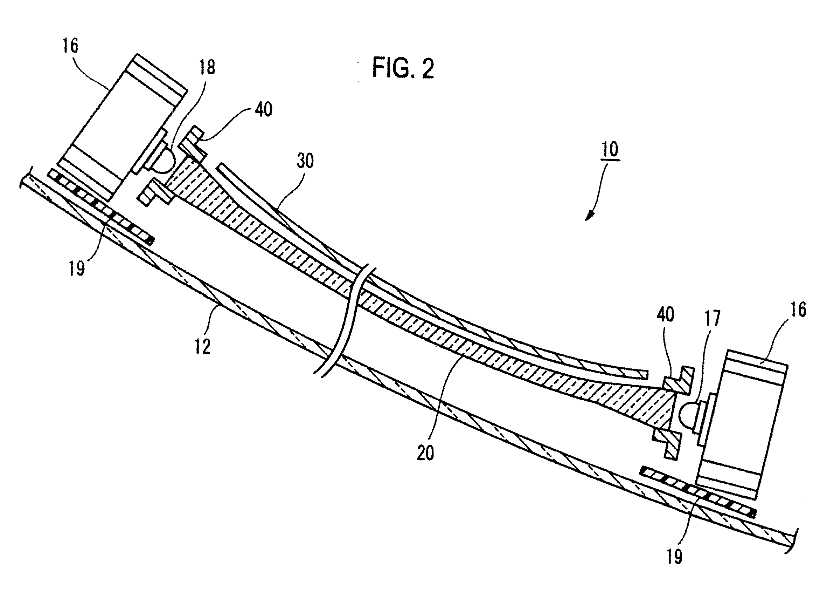

As shown in Figs. 1 and 2, a vehicle lamp 10 which is an embodiment applied to a pilot lamp of a headlamp including a lamp body 11 made of resin which is fixed to the vehicle body side in a shape whose vehicle front side is opened, and a colorless transparent front cover 12 which is attached to an opening portion of the lamp body 11.

The vehicle lamp 10 has a bulb 14 arranged for the headlamp 14 at a central portion within a lamp chamber which is defined by the lamp body 11 and the front cover 12. The front cover 12 is arranged so as to slant from the front on the central side of a vehicle body toward the rear on the lateral side of the vehicle body, and a light guide 20 which is a columnar light guide which is curved along the front cover 12 is arranged. Additionally, a reflecting member 30, which is curved so as to maintain a predetermined spacing from the light guide 20, is arranged in the vicinity of the rear face side of the light guide 20.

Heat-radiating members (heat sinks) 16 are attached to the vicinities of both ends of the light guide 20, and LED light sources 17 and 18 and the ends of the light guide 20 are fixed to lateral portions of the heat-radiating members 16 via plate-shaped members 40 which will be described below. For example, position lamp light distribution is formed by the LED light source 17 and the light guide 20. Additionally, an extension 19 is arranged around the opening portion of the lamp body 11.

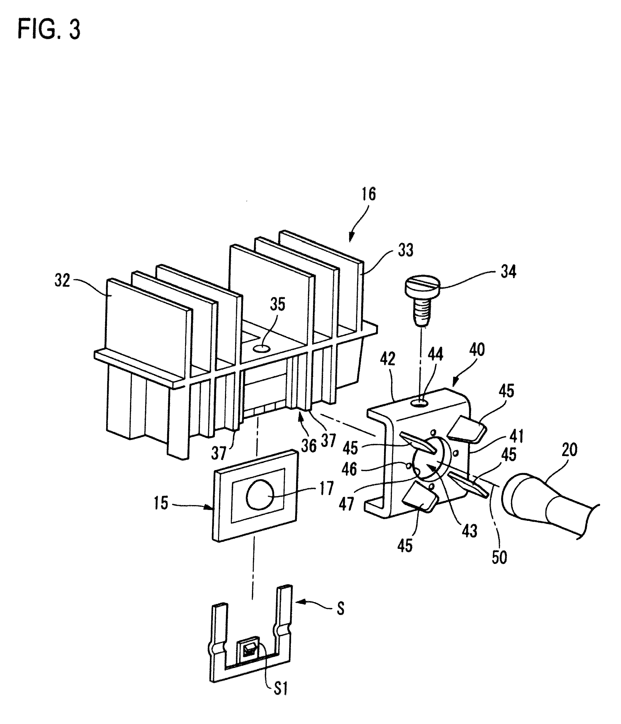

As shown in figure 3, each heat-radiating member 16 is made by aluminum die casting, has a plurality of heat-radiating fins 32 and 33 for heat radiation at an upper portion thereof, and has an attachment recess 36, to which the LED light source 17 formed between a pair of attachment pieces 37 and 37 is attached, at central side portions thereof. Additionally, the LED light source 17 is mounted on a rectangular fixing substrate 15. The fixing substrate 15 is biased toward the attachment recess 36 by a U-shaped leaf spring S. The leaf spring S includes a pressing projection S1 which presses the LED light source 17 against the attachment recess 36 via the fixing substrate 15.

The plate-shaped member 40 is an attachment component with a U-shaped cross-section which is composed of a flat plate portion 41 having a circular through hole 43 at the center thereof in plan view, and an attachment portion 42 having an attachment hole 44. Four attachment ribs 45 arranged in the shape of a cross about a central axis 50 of the through hole 43 at a peripheral edge of the through hole 43 to pinch a tip portion of the light guide 20, and four bosses 46 arranged between adjacent attachment ribs 45 and 45, respectively, are provided on the plate-shaped member 40 so as to protrude therefrom.

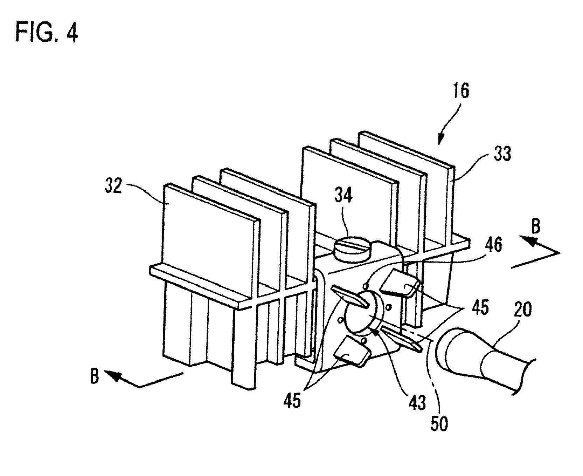

In assembling, the fixing substrate 15 is mounted on the attachment recess 36 of the heat-radiating member 16, and is biased by the leaf spring S from above the substrate. Also, the plate-shaped member 40 is mounted on the portion of the attachment recess 36 so that the attachment hole 44 matches a screw hole 35 on the side of the heat-radiating member 16 from above the plate-shaped member, and is tightened with a screw 34, and thereby fixed to the heat-radiating member 16 (refer to Fig. 4).

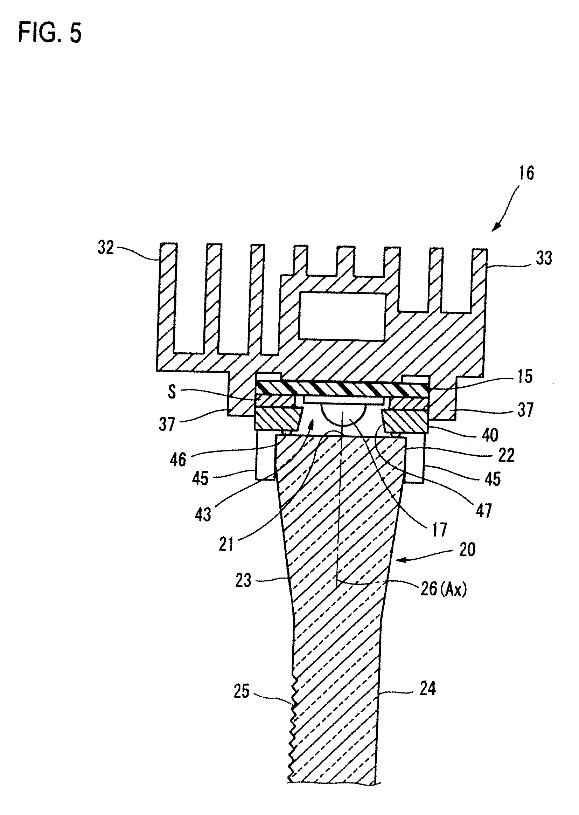

As shown in Fig. 5, the light guide 20 is constituted by a planar incident portion 21 on which the light of the LED light source 17 is incident, a larger-diameter tip portion 22, a smaller-diameter light guide portion 24, and a tapered portion 23 whose diameter gradually decreases from the tip portion 22 toward the light guide portion 24. A triangular diffusing step 25, which internally reflects the light from the LED light source 17 toward the front of the vehicle, is formed in the shape of a belt along the light guide portion 24 on the rear face side passing through an extension axis of the light guide portion 24.

An inner peripheral surface 47 of the through hole 43 of the plate-shaped member 40 is a slope which forms a substantially truncated conical space whose diameter increases from the a columnar curved surface or LED light source 17 side toward the light guide 20. An annular reflecting portion can be formed by forming, for example, an aluminum vapor deposition face on the inner peripheral surface 47.

As the tip portion 22 of the light guide 20 is inserted between the attachment ribs 45 and 45 arranged in the shape of a cross in the vicinity of the peripheral edge of the through hole 43, four spots of the tip portion 22 are pinched by inner peripheral edge portions of the four attachment ribs 45 arranged about the central axis 50 of the annular reflecting portion 47. At this time, the incident portion 21 of the light guide 20 abuts on the bosses 46 provided to protrude between the attachment ribs 45 and 45. Thereby, the optical axis Ax of the LED light source 17 is positioned so as to coincide with a central axis 26 of the incident portion 2 and coincide with the central axis 50 of the annular reflecting portion 47. In addition, the LED light source 17 may be arranged on the central axis 50 of the annular reflecting portion 47. The optical axis Ax of the LED light source 17 and the central axis 26 of the incident portion 21 do not necessarily coincide with the central axis 50 of the annular reflecting portion 47.

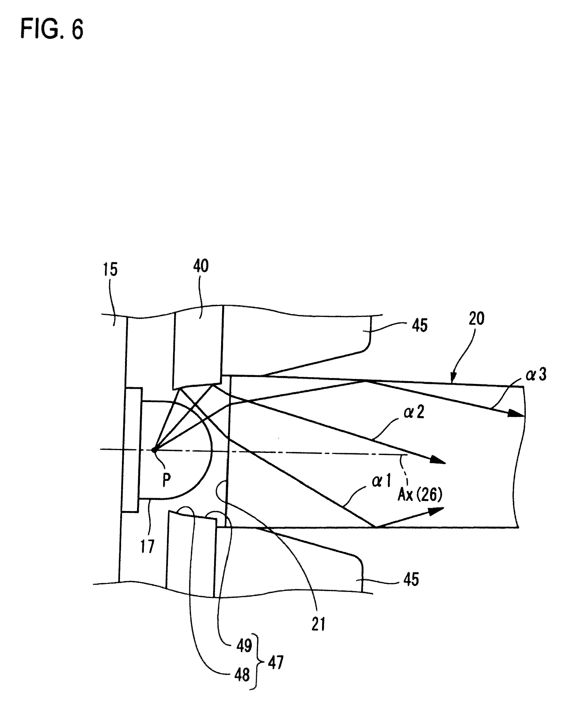

As shown in Fig. 6, the annular reflecting portion 47, which is an inner peripheral surface of the through hole 43 of the plate-shaped member 40, is formed by two discontinuous surfaces including: a first reflecting portion 48, which forms the shape of a truncated conical surface formed on the LED light source 17 side; and a second reflecting portion 49, which is formed on the light guide 20 side, has a larger diameter than the first reflecting portion 48, and forms the shape of a truncated conical surface with a small apex angle. In addition, the annular reflecting portion 47 is not necessarily a discontinuous surface, and can also be a simple columnar curved surface, or a curved surface whose diameter increases as it extends away from an LED light source.

The light α1 with a large emission angle which is emitted from a pseudo light source P of the LED light source 17 and cannot directly enter the incident portion 21 of the light guide 20 is reflected by the first reflecting portion 48, and then enters the vicinity of the central axis 26 of the incident portion 21 so as to avoid reflection to a dome portion of the LED light source 17. Additionally, similarly, the light α2 which cannot directly enter the incident portion 21 and has a smaller emission angle than the light α1 is reflected by the second reflecting portion 49 and enters the vicinity of the outer peripheral side of the incident portion 21. Additionally, the light α3 whose emission angle is yet smaller than the light α2 directly enters the incident portion 21, and then is internally reflected and is guided in an extension direction.

In this way, it is possible to make the light with a large emission angle which has not been able to enter the light guide 20 reliably enter the incident portion 21. Additionally, by providing the first reflecting portion 48 with a truncated conical surface whose apex angle is larger than the second reflecting portion 49, on the LED light source 17 side of the annular reflecting portion 47, the light α1 can be prevented from entering the dome portion of the LED light source 17 after being reflected by the first reflecting portion 48, and the light use efficiency of the LED light source 17 is enhanced.

According to one or more embodiments of the vehicle lamp 10 as described above, there is included the annular reflecting portion 47 which reflects, toward the incident portion 21, the light α1 and light α2 with a large emission angle which are arranged in the vicinity of the LED light source 17 of the incident portion 21, and cannot directly enter the incident portion 21 from the LED light source 17. Thereby, because the light α1 and light α2 with a large emission angle from the LED light source 17 can be reflected by the annular reflecting portion 47, and can be made to enter the light guide 20 from the incident portion 21, the light use efficiency of the LED light source 17 can be improved.

Additionally, the plurality of attachment ribs 45, which fix the light guide 20, are integrally formed along the central axis 50 of the annular reflecting portion 47, around the through hole 43 on the light guide 20 side of the plate-shaped member 40.

Thereby, because the light guide 20 can be positioned at a predetermined position of the plate-shaped member 40 having the annular reflecting portion 47, the positioning precision of the incident portion 21 of the light guide 20 can be improved.

Additionally, the annular reflecting portion 47 includes a slope which forms a substantially truncated conical space whose diameter increases toward the light guide 20 from the LED light source 17 side. Additionally, the light guide 20 is formed so that the shape of the incident portion 21 in the front view as seen from a position where the LED light source 17 is arranged is circular, and the external diameter decreases gradually toward the extension direction from the incident portion 21. Thereby, because the external diameter of the incident portion 21 of the end of the light guide 20 can be made large and the incidence area of the light guide 20 can be made large, the light use efficiency of the LED light source 17 can be further improved.

Additionally, because the LED light source 17 and the annular reflecting portion 47 are fixed to the heat-radiating member 16 attached to the lamp body 11, the positional precision of the LED light source 17 can be improved.

Those skilled in the art will appreciate that the material, shape, dimension, numerical value, form, number, arrangement place, and the like of the respective constituent elements of the above-described embodiments may be set arbitrarily so long as the invention can be achieved. While description has been made in connection with specific exemplary embodiments, it will be obvious to those skilled in the art that various changes and modifications may be made therein without departing from the present invention.

## Claims

1. A vehicle lamp (10) comprising: within a lamp chamber formed by a lamp body (11) and a front cover (12),
a light source (17, 18);
a columnar light guide (20) having an incident portion (21) at the end thereof in the vicinity of the light source (17, 18),
wherein the columnar light guide (20) guides incident light from the light source (17, 18), which enters via the incident portion (21), and irradiates the incident light from a light-emitting portion on a front side;
**characterized in that**
the light source (17, 18) is mounted on a fixing substrate (15),
and by further comprising
a plate shaped attachment member (40) for fixing the columnar light guide (20) having a through hole (43) arranged in the vicinity of the light source side of the incident portion (21),
wherein a peripheral surface of said through hole (43) forms an annular reflecting portion (47), and the fixing substrate (15) and the annular reflecting portion (47) are fixed to a heat-radiating member (16) attached to the lamp body (11)
wherein the annular reflecting portion (47) reflects light (α1, α2) with a large emission angle in relation to the optical axis (Ax) of the light source (17, 18), that is to say which has not been able to directly enter the incident portion (21) from the light source (17, 18), toward the incident portion (21), and
wherein the light source (17, 18) is arranged on a central axis (50) of the annular reflecting portion (47).

2. The vehicle lamp (10) according to Claim 1,
wherein a plurality of attachment ribs (45), which fix the columnar light guide (20), are integrally formed along the central axis (50) of the annular reflecting portion (47), around the through hole (43) on the columnar light guide side of the plate-shaped member (40).

3. The vehicle lamp (10) according to Claim 1 or 2,
wherein the annular reflecting portion (47) includes a columnar curved surface (48, 49) or a slope which forms a substantially truncated conical space whose diameter increases toward the columnar light guide (20) from the light source (17, 18), and
the columnar light guide (20) is formed so that the shape of the incident portion (21) in front view as seen from a position where the light source (17, 18) is arranged is circular, and the external diameter decreases gradually toward an extension direction from the incident portion (21).

4. The vehicle lamp (10) according to any one of claims 1 to 3,
wherein the light source (17, 18) is a LED light source.

5. The vehicle lamp (10) according to any one of claims 1 to 4,
wherein the columnar light guide (20) is curved along the front cover (12).

6. The vehicle lamp (10) according to any one of claims 1 to 5 comprising:
a second light source (18);
a columnar light guide (20) having a second incident portion at the other end thereof in the vicinity of the second light source (18),
wherein the columnar light guide (20) guides incident light from the second light source (18), which enters via the second incident portion, and irradiates the incident light from the light-emitting portion on the front side; and
a second annular reflecting portion arranged in the vicinity of the second light source side of the second incident portion,
wherein the second annular reflecting portion reflects light with a large emission angle, which has not been able to directly enter the second incident portion from the second light source (18), toward the incident portion,
wherein the second light source (18) is arranged on a central axis of the second annular reflecting portion.

7. The vehicle lamp (10) according to Claim 6,
wherein the second annular reflecting portion is formed on a peripheral surface of a through hole formed in a second plate-shaped member (40), and
a plurality of attachment ribs, which fix the columnar light guide (20), are integrally formed along the central axis of the second annular reflecting portion, around the through hole on the columnar light guide side of the plate-shaped member (40).

8. The vehicle lamp (10) according to Claim 6 or 7,
wherein the second annular reflecting portion includes a columnar curved surface or a slope which forms a substantially truncated conical space whose diameter increases toward the columnar light guide (20) from the second light source (18), and
the columnar light guide (20) is formed so that the shape of the second incident portion in front view as seen from a position where the second light source (18) is arranged is circular, and the external diameter decreases gradually toward an extension direction from the second incident portion.

9. The vehicle lamp (10) according to any one of claims 6-8,
wherein the second light source (18) and the second annular reflecting portion are fixed to a second heat-radiating member (16) attached to the lamp body (11).

10. The vehicle lamp according to any one of claims 6 to 9,
wherein the light source (17) and the second light source (18) are LED light sources.

## Patentansprüche

1. Fahrzeugleuchte (10), umfassend: innerhalb einer Leuchtenkammer, welche durch ein Leuchtengehäuse (11) und eine vordere Abdeckung (12) gebildet wird,
eine Lichtquelle (17, 18),
einen säulenförmigen Lichtleiter (20), der an seinem Ende in der Nähe der Lichtquelle (17, 18) einen Einstrahlabschnitt (21) aufweist,
wobei der säulenförmige Lichtleiter (20) von der Lichtquelle (17, 18) einfallendes Licht, das über den Einstrahlabschnitt (21) eintritt, leitet und das einfallende Licht von einem Lichtabstrahlabschnitt an einer Vorderseite abstrahlt,
**dadurch gekennzeichnet, dass**
die Lichtquelle (17, 18) an einem Befestigungssubstrat (15) angebracht ist, und dadurch, dass sie ferner umfasst:
ein plattenförmiges Befestigungsglied (40) zum Befestigen des säulenförmigen Lichtleiters (20), welches ein Durchgangsloch (43) aufweist, das in der Nähe der Lichtquellenseite des Einstrahlabschnitts (21) angeordnet ist,
wobei eine Umfangsoberfläche des Durchgangslochs (43) einen ringförmigen Reflexionsabschnitt (47) bildet und das Befestigungssubstrat (15) und der ringförmige Reflexionsabschnitt (47) an einem wärmeabstrahlenden Glied (16) befestigt sind, das an dem Leuchtengehäuse (11) befestigt ist,
wobei der ringförmige Reflexionsabschnitt (47) Licht (α1, α2) mit einem großen Abstrahlwinkel in Bezug auf die optische Achse (Ax) der Lichtquelle (17, 18), das heißt, welches nicht in der Lage war, direkt von der Lichtquelle (17, 18) in den Einstrahlabschnitt (21) einzutreten, in Richtung des Einstrahlabschnitts (21) reflektiert, und
wobei die Lichtquelle (17, 18) auf einer Mittelachse (50) des ringförmigen Reflexionsabschnitts (47) angeordnet ist.

2. Fahrzeugleuchte (10) nach Anspruch 1,
wobei mehrere Befestigungsrippen (45), welche den säulenförmigen Lichtleiter (20) befestigen, einstückig entlang der Mittelachse (50) des ringförmigen Reflexionsabschnitts (47) um das Durchgangsloch (43) herum auf der dem säulenförmigen Lichtleiter zugewandten Seite des plattenförmigen Glieds (40) ausgebildet sind.

3. Fahrzeugleuchte (10) nach Anspruch 1 oder 2,
wobei der ringförmige Reflexionsabschnitt (47) eine säulenförmige gekrümmte Oberfläche (48, 49) oder eine Schräge umfasst, welche einen im Wesentlichen kegelstumpfförmigen Raum bildet, dessen Durchmesser von der Lichtquelle (17,18) in Richtung des säulenförmigen Lichtleiters (20) zunimmt, und
der säulenförmige Lichtleiter (20) derart ausgebildet ist, dass die Gestalt des Einstrahlabschnitts (21) in einer Vorderansicht betrachtet aus einer Position, wo die Lichtquelle (17, 18) angeordnet ist, kreisförmig ist und der Außendurchmesser in einer Erstreckungsrichtung von dem Einstrahlabschnitt (21) weg allmählich abnimmt.

4. Fahrzeugleuchte (10) nach einem beliebigen der Ansprüche 1 bis 3,
wobei die Lichtquelle (17, 18) eine LED-Lichtquelle ist.

5. Fahrzeugleuchte (10) nach einem beliebigen der Ansprüche 1 bis 4,
wobei der säulenförmige Lichtleiter (20) entlang der vorderen Abdeckung (12) gekrümmt ist.

6. Fahrzeugleuchte (10) nach einem beliebigen der Ansprüche 1 bis 5, umfassend:
eine zweite Lichtquelle (18),
einen säulenförmigen Lichtleiter (20), der an seinem anderen Ende in der Nähe der zweiten Lichtquelle (18) einen zweiten Einstrahlabschnitt aufweist,
wobei der säulenförmige Lichtleiter (20) von der zweiten Lichtquelle (18) einfallendes Licht, welches über den zweiten Einstrahlabschnitt eintritt, führt und das einfallende Licht von dem Lichtabstrahlabschnitt an der Vorderseite abstrahlt, und
einen zweiten ringförmigen Reflexionsabschnitt, der in der Nähe der der zweiten Lichtquelle zugewandten Seite des zweiten Einstrahlabschnitts angeordnet ist,
wobei der zweite ringförmige Reflexionsabschnitt Licht mit einem großen Abstrahlwinkel, welches nicht in der Lage war, direkt von der zweiten Lichtquelle (18) in den zweiten Einstrahlabschnitt einzutreten, in Richtung des Einstrahlabschnitts reflektiert,
wobei die zweite Lichtquelle (18) auf einer Mittelachse des zweiten ringförmigen Reflexionsabschnitts angeordnet ist.

7. Fahrzeugleuchte (10) nach Anspruch 6,
wobei der zweite ringförmige Reflexionsabschnitt auf einer Umfangsoberfläche eines Durchgangslochs ausgebildet ist, welches in einem zweiten plattenförmigen Glied (40) ausgebildet ist, und
mehrere Befestigungsrippen, welche den säulenförmigen Lichtleiter (20) befestigen, einstückig entlang der Mittelachse des zweiten ringförmigen Reflexionsabschnitts, um das Durchgangsloch herum auf der dem säulenförmigen Lichtleiter zugewandten Seite des plattenförmigen Glieds (40) ausgebildet sind.

8. Fahrzeugleuchte (10) nach Anspruch 6 oder 7,
wobei der zweite ringförmige Reflexionsabschnitt eine säulenförmige gekrümmte Oberfläche oder eine Schräge umfasst, welche einen im Wesentlichen kegelstumpfförmigen Raum bildet, dessen Durchmesser von der zweiten Lichtquelle (18) in Richtung des säulenförmigen Lichtleiters (20) zunimmt, und
der säulenförmige Lichtleiter (20) derart ausgebildet ist, dass die Gestalt des zweiten Einstrahlabschnitts in Vorderansicht betrachtet aus einer Position, wo die zweite Lichtquelle (18) angeordnet ist, kreisförmig ist und der Außendurchmesser in einer Erstreckungsrichtung von dem zweiten Einstrahlabschnitt weg allmählich abnimmt.

9. Fahrzeugleuchte (10) nach einem beliebigen der Ansprüche 6 - 8,
wobei die zweite Lichtquelle (18) und der zweite ringförmige Reflexionsabschnitt an einem zweiten wärmeabstrahlenden Glied (16) befestigt sind, das an dem Leuchtengehäuse (11) befestigt ist.

10. Fahrzeugleuchte nach einem beliebigen der Ansprüche 6 bis 9,
wobei die Lichtquelle (17) und die zweite Lichtquelle (18) LED-Lichtquellen sind.

## Revendications

1. Feu de véhicule (10) comportant : à l'intérieur d'une chambre de feu formée par un corps de feu (11) et un couvercle avant (12),
une source de lumière (17, 18) ;
un guide de lumière en forme de colonne (20) ayant une partie incidente (21) à l'extrémité de celui-ci au voisinage de la source de lumière (17, 18),
dans lequel le guide de lumière en forme de colonne (20) guide de la lumière incidente provenant de la source de lumière (17, 18), qui entre par l'intermédiaire de la partie incidente (21), et irradie la lumière incidente provenant d'une partie d'émission de lumière sur un côté avant ;
**caractérisé en ce que**
la source de lumière (17, 18) est montée sur un substrat de fixation (15),
et comportant en outre
un élément de fixation en forme de plaque (40) destiné à fixer le guide de lumière en forme de colonne (20) ayant un trou débouchant (43) disposé au voisinage du côté de source de lumière de la partie incidente (21),
dans lequel une surface périphérique dudit trou débouchant (43) forme une partie réfléchissante annulaire (47), et le substrat de fixation (15) et la partie réfléchissante annulaire (47) sont fixés sur un élément de rayonnement de chaleur (16) fixé sur le corps de feu (11),
dans lequel la partie réfléchissante annulaire (47) réfléchit de la lumière (α1, α2) avec un grand angle d'émission par rapport à l'axe optique de la source de lumière (17, 18), c'est-à-dire qui n'a pas été capable d'entrer directement dans la partie incidente (21) depuis la source de lumière (17, 18), vers la partie incidente (21), et
dans lequel la source de lumière (17, 18) est disposée sur un axe central (50) de la partie réfléchissante annulaire (47).

2. Feu de véhicule (10) selon la revendication 1,
dans lequel une pluralité de nervures de fixation (45), qui fixent le guide de lumière en forme de colonne (20), est formée d'un seul tenant le long de l'axe central (50) de la partie réfléchissante annulaire (47), autour du trou débouchant (43) sur le côté en forme de colonne de guide de lumière de l'élément en forme de plaque (40).

3. Feu de véhicule (10) selon la revendication 1 ou 2,
dans lequel la partie réfléchissante annulaire (47) comprend une surface courbe en forme de colonne (48, 49) ou une pente qui forme un espace conique sensiblement tronqué dont le diamètre augmente vers le guide de lumière en forme de colonne (20) de la source de lumière (17, 18), et
le guide de lumière en forme de colonne (20) est formé de telle sorte que la forme de la partie incidente (21) en vue de face telle que vue depuis une position où la source de lumière (17, 18) est disposée est circulaire, et le diamètre externe diminue progressivement vers une direction d'extension de la partie incidente (21).

4. Feu de véhicule (10) selon l'une quelconque des revendications 1 à 3,
dans lequel la source de lumière (17, 18) est une source de lumière à diode électroluminescente.

5. Feu de véhicule (10) selon l'une quelconque des revendications 1 à 4,
dans lequel le guide de lumière en forme de colonne (20) est courbé le long du couvercle avant (12).

6. Feu de véhicule (10) selon l'une quelconque des revendications 1 à 5 comportant :
une deuxième source de lumière (18) ;
un guide de lumière en forme de colonne (20) ayant une deuxième partie incidente à l'autre extrémité de celui-ci au voisinage de la deuxième source de lumière (18),
dans lequel le guide de lumière en forme de colonne (20) guide de la lumière incidente provenant de la deuxième source de lumière (18), qui entre par l'intermédiaire de la deuxième partie incidente, et irradie la lumière incidente provenant de la partie d'émission de lumière sur le côté avant ; et
une deuxième partie réfléchissante annulaire disposée au voisinage du côté de deuxième source de lumière de la deuxième partie incidente,
dans lequel la deuxième partie réfléchissante annulaire réfléchit de la lumière avec un grand angle d'émission, qui n'a pas été capable d'entrer directement dans la deuxième partie incidente de la deuxième source de lumière (18), vers la partie incidente,
dans lequel la deuxième source de lumière (18) est disposée sur un axe central de la deuxième partie réfléchissante annulaire.

7. Feu de véhicule (10) selon la revendication 6,
dans lequel la deuxième partie réfléchissante annulaire est formée sur une surface périphérique d'un trou débouchant formé dans un deuxième élément en forme de plaque (40), et
une pluralité de nervures de fixation, qui fixent le guide de lumière en forme de colonne (20), est formée d'un seul tenant le long de l'axe central de la deuxième partie réfléchissante annulaire, autour du trou débouchant sur le côté de guide de lumière en forme de colonne de l'élément en forme de plaque (40).

8. Feu de véhicule (10) selon la revendication 6 ou 7,
dans lequel la deuxième partie réfléchissante annulaire comprend une surface courbe en forme de colonne ou une pente qui forme un espace conique sensiblement tronqué dont le diamètre augmente vers le guide de lumière en forme de colonne (20) depuis la deuxième source de lumière (18), et
le guide de lumière en forme de colonne (20) est formé de telle sorte que la forme de la deuxième partie incidente en vue de face telle que vue depuis une position où la deuxième source de lumière (18) est disposée est circulaire, et le diamètre externe diminue progressivement vers une direction d'extension de la deuxième partie incidente.

9. Feu de véhicule (10) selon l'une quelconque des revendications 6 à 8,
dans lequel la deuxième source de lumière (18) et la deuxième partie réfléchissante annulaire sont fixées sur un deuxième élément de rayonnement de chaleur (16) fixé sur le corps de feu (11).

10. Feu de véhicule selon l'une quelconque des revendications 6 à 9,
dans lequel la source de lumière (17) et la deuxième source de lumière (18) sont des sources de lumière à diode électroluminescente.
